# FASCICULE DE BREVET EUROPEEN

(11) **EP 1 466 878 B1**
(45) Date de publication et mention de la délivrance du brevet: **04.06.2014**
(21) Numéro de dépôt: 04300190.8
(22) Date de dépôt: 08.04.2004
(51) Int. Cl.: C04B 26/22, E01C 7/30, C04B 26/00, C04B 111/00

(54) **Liant de nature végétale pour la réalisation de matériaux pour le bâtiment et/ou les travaux publics**
Pflanzliches Bindemittel zur Herstellung von Baumaterialien für Gebäude und/oder öffentliche Bauarbeiten
Vegetal binder for the realisation of materials for buildings and/or public works

(30) Priorité: 08.04.2003 FR 0304361
(43) Date de publication de la demande: 13.10.2004
(73) Titulaire: COLAS, 92653 Boulogne-Billancourt Cédex (FR)
(72) Inventeur: Ballie, Michel, 78180 Montigny-le-Bretonneux (FR); Poirier, Jean-Eric, 78180 Montigny le Bretonneux (FR); Delcroix, Thierry, 95600 Eaubonne (FR)
(74) Mandataire: Catherine, Alain

(56) Documents cités:
- FR-A- 2 768 150
- GB-A- 734 576
- US-A- 1 341 490
- US-A- 5 021 476

## Description

La présente invention concerne d'une manière générale un liant de nature végétale et son utilisation pour la réalisation de matériaux pour le bâtiment et les travaux publics, et en particulier des matériaux pour confectionner des couches et/ou revêtements de construction routière et/ou de génie civil.

Aujourd'hui de nombreuses chaussées, sinon la plupart, sont revêtues d'enrobés bitumineux qui ont fait la preuve de leur capacité à répondre aux contraintes de l'application d'une part et aux sollicitations liées au trafic et aux conditions climatiques d'autre part. Ces enrobés sont jugés appropriés à cet usage et leur durabilité est reconnue. Ils sont constitués par des granulats liés entre eux par du bitume ou du bitume modifié par ajout d'additifs, en particulier des élastomères et/ou des polymères thermoplastiques.

Des granulats liés par du bitume sont également utilisés dans le Bâtiment et les Travaux Publics pour constituer entre autres des chapes d'étanchéité, des revêtements de trottoirs, des perrés, des revêtements d'ouvrage d'art, etc...

Le bitume est de plus utilisé dans des applications dites industrielles comme l'étanchéité, l'isolation thermique ou phonique, etc...

Parmi les propriétés qui confèrent au bitume ses qualités d'usage en tant que liant, la visco-élasticité joue un rôle fondamental. C'est elle qui permet de trouver un bon compromis entre souplesse et rigidité.

Le bitume est une matière issue de la transformation du pétrole. À ce titre il fait partie des matières premières dites non renouvelables puisque le pétrole est une matière fossile.

Les matériaux pour le génie civil doivent pouvoir conserver leurs propriétés, en particulier de visco-élasticité, sur un large domaine de températures allant de -20°C à +70°C. C'est cette caractéristique qui a fait la réputation du bitume comme matériau pour le génie civil.

En ce qui concerne la rhéologie en général et la visco-élasticité en particulier, on pourra consulter le chapitre « Les liants hydrocarbonés » de l'ouvrage intitulé « Les enrobés bitumineux - Tome 1 » publié par l'USIRF en décembre 2001.

Le document GB-734 576 décrit un vernis pour la réalisation de films de revêtement d'aspect uniformément ridé qui comprend le produit de réaction à 175-280°C d'une résine synthétique ou naturelle et d'une huile végétale, le poids d'huile étant une fois et demi celui de la résine et d'additifs tels que des sels métalliques (cobalt notamment), dans des conditions strictes (vide de 10 à 40 mm de Hg ou atmosphère de CO₂). Un solvant tel que le benzène est ajouté au produit de réaction.

Eut égard au procédé de préparation et au fait que le produit obtenu est un vernis qui doit pouvoir s'appliquer comme une peinture, le produit obtenu est beaucoup trop fluide pour être utilisé comme liant et ne présente pas les caractéristiques de pénétrabilité requises.

Le brevet EP 2 768 150 décrit un liant bitumeux pour la construction de routes, contenant du bitume et un fluidifiant. Le fluidifiant comprend au moins un monoester d'acide gras. Ce monoester d'acide gras peut être obtenu par transestérification à partir d'huiles végétales. Il a pour but de se substituer aux fluxants d'origine pétrolière traditionnellement utilisés pour fluidifier le bitume. Le bitume est par définition un produit obtenu par distillation du pétrole qui est une huile minérale.

Le brevet des Etats-Unis US-5,021,476 décrit un liant pour la réalisation de pavement élastique de rue qui consiste en une résine de tall oil, une résine de bois, une résine de thérébenthine, un dérivé de ces résines ou un mélange de ces résines ou dérivés et une huile de traitement minérale ou végétale.

Pour obtenir un liant selon US-5,021,476 ayant une résistance à froid convenable, il faut ajouter au liant un élastomère, par exemple, un élastomère styrène-butadiène.

Egalement, pour obtenir un liant selon US-5,021,476 conduisant à des matériaux qui ne sont pas fragiles à froid et ne ramollissent pas à la chaleur, il faut ajouter au moins un polymère thermoplastique au liant, par exemple du polyéthylène, du propylène, un polyamide ou un polyester.

De préférence, le liant selon US-5,021,476 comporte à la fois un polymère thermoplastique et un élastomère.

Il serait donc souhaitable de disposer d'un liant pour la réalisation de matériaux pour le bâtiment et/ou les travaux publics qui présente des propriétés de visco-élasticité comparables à celles du bitume pour un large gamme de températures, allant de -20°C à +70°C, qui soit de nature végétale, et de préférence formulé à partir de matières premières renouvelables.

Les buts ci-dessus sont atteints selon l'invention par un liant de nature végétale pour la réalisation de matériaux pour le bâtiment et/ou les travaux publics tel que décrit dans le jeu de revendications, et qui comprend, par rapport au poids total du liant :
(a) au moins une résine naturelle ou naturelle modifiée, d'origine végétale, ayant un point de ramollissement mesuré selon la norme ISO 4625 de 100 à 200°C, et mieux encore de 120 à 180°C ;
(b) 20 à 40 % en poids d'au moins une huile d'origine végétale ayant une viscosité à 25°C de 50mPa.s à 1000Pa.s,
(d) ledit liant étant exempt de tout élastomère naturel ou synthétique et de tout polymère thermoplastique,
de sorte que ledit liant présente une pénétrabilité à 25°C, mesurée selon la norme NF EN 1426, de 20 à 300 1/10mm et un point de ramollissement de 30 à 75°C mesuré selon la norme NF EN 1427.

En particulier, le liant selon l'invention est exempt de tout élastomère naturel ou synthétique, tel que par exemple le polybutadiène, le latex, le caoutchouc styrène-butadiène (SBR), le styrène-butadiène-styrène (SBS), l'éthylène-acétate de vinyle (EVA), etc, et de tout polymère thermoplastique tel que, par exemple, les polyoléfines (polyéthylène, polypropylène), les polyamides et les polyesters.

Les spécifications des bitumes sont données dans la norme NF EN 12591. Ils sont caractérisés par une pénétrabilité, mesurée selon la norme NF EN 1426 et exprimée en dixième de millimètre. En fonction de cette pénétrabilité, un second paramètre est retenu pour caractériser la consistance des bitumes. Il s'agit soit de la température de ramollissement, exprimée en degré centigrade et mesurée selon NF EN 1427, soit de la viscosité à 60°C mesurée selon la norme NF EN 12596 et exprimée en Pa.s. Le choix entre l'un ou l'autre de ces deux paramètres est fonction de la pénétrabilité comme on peut le constater dans NF EN 12591. En fonction de l'usage visé, le bitume est choisi dans une des classes définies dans la norme NF EN 12591.

Le liant selon l'invention est destiné à remplacer le bitume dans toutes les applications de ce dernier. C'est pourquoi le liant selon l'invention est caractérisé par les mêmes paramètres, mesurés selon les mêmes méthodes, exprimés selon les mêmes unités. C'est également pourquoi en fonction de l'application visée, la pénétrabilité du liant selon l'invention, à 25°C, est comprise entre 20 et 300 1/10 mm. Sa température de ramollissement varie alors entre 75°C et 30°C. La pénétrabilité du liant selon l'invention peut également être comprise entre 300 et 900 1/10 mm, mesuré à 15°C. Dans ce cas, la viscosité à 60°C est comprise entre 20 et 2Pa.s.

Il n'y a pas de fourchette de pénétrabilité préférée car la pénétrabilité du liant selon l'invention est choisie en fonction de l'application comme dans le cas de bitume.

Le liant selon l'invention peut être sous forme d'une émulsion aqueuse. Dans ce cas, on peut utiliser tout émulsifiant classique, cationique, anionique ou non ionique ou des mélanges d'émulsifiants.

Les résines convenant pour la présente invention sont des substances exsudées par certains végétaux. Elles peuvent être d'origine fossile ou dite de récolte. Elles peuvent être utilisées telles quelles (résines naturelles) ou être transformées chimiquement (résines naturelles modifiées). Lorsqu'elles sont produites par des végétaux existants actuellement, elles constituent des matières premières renouvelables.

Parmi les résines naturelles et naturelles modifiées de récolte, on peut citer les résines accroïdes, le dammar, les colophanes naturelles et naturelles modifiées, les esters de colophanes, les savons de colophanes et les résinates métalliques.

Parmi les colophanes naturelles, on peut citer les colophanes de gemme et de bois et de tall oil, comme la poix de la tall oil.

Parmi les colophanes naturelles modifiées, on peut citer les colophanes hydrogénées, dismutées, polymérisées et maléisées.

Parmi les esters de colophanes, on peut citer les esters du glycérol et de colophanes naturelles, hydrogénées, dismutées, polymérisées et maléisées, et les esters du pentaérythritol et de colophanes naturelles et hydrogénées.

Parmi les résinates métalliques, on peut citer les carboxylates métalliques, par exemple de Ca, Zn, Mg, Ba, Pb, Co, obtenus à partir des colophanes naturelles ou modifiées, les résinates de calcium, les résinates de zinc et les résinates mixtes de calcium et de zinc.

Bien que cela ne soit pas recommandé pour les raisons mentionnées précédemment, on peut également utiliser pour la formulation du liant selon l'invention des résines naturelles végétales d'origine fossile.

Parmi ces résines fossiles, on peut citer les copals.

Pour entrer utilement dans la formulation du liant selon l'invention, la résine doit avoir une température de ramollissement de 30 à 200°C, mieux de 80 à 200°C, mieux encore de 100 à 200°C, et préférentiellement de 120 à 180°C.

En général, on utilisera de préférence des résines ayant une température de ramollissement d'au moins 100°C, de préférence d'au moins 120°C, car ces résines conduisent, après mélange avec des huiles végétales dans des proportions appropriées, à des liants ayant les caractéristiques de visco-élasticité les plus proches, voire analogues à celles des bitumes pour une plage de températures allant de -20°C à +70°C, et sans qu'il soit nécessaire de rajouter à la formulation du liant un élastomère et/ou un polymère thermoplastique.

Le tableau I ci-dessous rassemble des familles préférées de résines utiles pour la présente invention.

**TABLEAU I**

| **Nom** | **Type (1)** | **Température de ramollissement, °C** |
|---|---|---|
| Copal du Congo | F | 100 à 180 |
| Copal de Zanzibar | F | 140 à 190 |
| Copal du Benguéla | F | 104 à 130 |
| Accroïdes | R | 100 à 133 |
| Dammar | R | 75 à 126 |
| Colophanes modifiées | R,T | 125 à 160 |
| Esters de colophanes (polymérisation en présence de glycol) | R,T | > 120 |
| Esters de colophanes (moléïsation en présence de glycol) | R,T | > 130 |
| Résinate de calcium | R,T | 135 à 170 |

| | | |
|---|---|---|
| (1) F : Fossile, R : Récolte, T : ayant subi une transformation chimique | | |

Bien évidemment, on peut utiliser des mélanges de deux ou plus des résines naturelles ou naturelles modifiées selon l'invention.

Pour plus d'informations quant aux résines naturelles et naturelles modifiées, on peut se reporter à l'article de Bernard DELMOND, « Résines naturelles », Techniques de l'Ingénieur, traité « Constantes physico-chimiques » - K340-1 à 12, mai 2002.

Comme indiqué précédemment, le liant selon l'invention comprend encore comme composant essentiel une ou plusieurs huiles d'origine végétale.

Comme cela est bien connu, les huiles végétales sont obtenues par trituration de graines, noyaux, fruits de végétaux oléogineux.

Les huiles végétales peuvent être utilisées brutes ou raffinées. Elles peuvent également être modifiées par des réaction chimiques, comme l'estérification, ces huiles pouvant être éventuellement chimiquement modifiées.

Parmi les huiles végétales convenant pour le liant selon l'invention, on peut citer : les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide et de coprah.

Les huiles végétales préférées selon l'invention sont les huiles de lin, de ricin et de bois.

Les huiles végétales peuvent être employées seules ou en présence d'un catalyseur qui accélère la réaction de polymérisation de l'huile en présence d'oxygène. Ces catalyseurs sont bien connus et sont généralement des sels organiques de métaux tels que le cobalt, le zirconium et le manganèse, en particulier des octanoates et naphtènates de ces métaux.

Les huiles végétales convenant pour le liant de l'invention ont en général une viscosité à 25°C telle que mesurée au viscosimètre Brookfield de 50mPa.s à 1000Pa.s, de préférence de 50mPa.s à 500mPa.s.

Bien évidemment, la viscosité de l'huile est choisie en fonction de la résine ou des résines utilisées pour formuler le liant, de manière à obtenir un liant ayant la pénétrabilité et le point de ramollissement ou la viscosité requis.

Les huiles végétales selon l'invention peuvent avoir des indices d'iode compris entre 0 et 200.

Le tableau II ci-dessous indique des huiles végétales préférées pour le liant de l'invention.

**TABLEAU II**

| **Nom** | **Viscosité à 25°C** | **Commentaires** |
|---|---|---|
| Huile de lin | Variable de 10mPa.s à 20mPa.s suivant leur degré de modification | En fonction de leur indice d'iode, on aura des huiles plus ou moins polymérisables. Cette polymérisation est provoquée par la réaction des doubles liaisons, portées par les chaînes des acides gras qui composent ces huiles, avec l'oxygène. Le qualificatif siccatif ou semi-siccatif est utilisé pour caractériser cette propriété. Des catalyseurs de siccativation, sels métalliques, peuvent être utilisés pour accélérer cette réaction. |
| Huile de graine de soja | Viscosité variable de 10mPa.s à 2Pa.s | |
| Ester méthylique de colza | Viscosité cinématique de l'ordre de 3 à 5 mm2/s à 40°C | Obtenues par transestérification de l'huile de tournesol. Utilisées comme substitut du gazole. |
| Huile de ricin deshydratée | Viscosité variable de 15mPa.s à 1Pa.s | |

Le ou les huiles végétales représentent 20 à 40% en poids par rapport au poids total du liant.

Le liant selon l'invention peut également comprendre un ou plusieurs agents colorants tels que des pigments minéraux et des colorants organiques.

Le liant selon l'invention peut être utilisé pour la réalisation de matériaux pour le bâtiment et les travaux publics, en particulier des matériaux pour confectionner des couches et/ou revêtements de construction routière et/ou de génie civil.

Ainsi, le liant selon l'invention peut être utilisé pour lier des granulats entre eux et éventuellement les coller sur le support sur lequel ils sont répandus.

Le liant peut être mélangé aux granulats avant application pour former des enrobés (technique d'enrobage), ou répandu sur la chaussée avant ou après le répandage des granulats pour former les couches ou revêtements (technique d'enrobage).

Pour le terme granulat, il est fait référence aux matériaux décrits dans la norme XP P 18-540. Les agrégats, au sens de XP P 98-135, sont également susceptibles d'être utilisés en combinaison avec le liant selon l'invention.

Pour caractériser les enrobés, on utilise en particulier la description de leur formule granulaire, c'est-à-dire la répartition de la masse des granulats qui entrent dans la composition de l'enrobé en fonction de la classe granulaire.

En ce qui concerne les enrobés bitumineux, les évolutions de la technique ont permis de sélectionner des formules granulaires plus aptes que d'autres à satisfaire des spécifications de performances. Par performances on entend les propriétés des enrobés telles qu'ont peut les caractériser à l'aide des essais suivants :

| **Performance** | **Norme d'essais** | **Commentaires** |
|---|---|---|
| Compactabilité | NF P98-252 | Capacité de l'enrobé à être mis en place avec une compacité spécifiée |
| Résistance mécanique et tenue à l'eau | NF P98-251-1 | Durabilité face aux agressions du trafic et aux risques de désenrobage |
| Résistance à l'orniérage | NF P98-253-1 | Capacité à résister au fluage lié à l'application du trafic |
| Module complexe | NF P98-260-2 | Capacité à supporter les efforts. |
| Comportement en fatigue | NF P98-261-1 | Capacité à maintenir intactes les propriétés de l'enrobé en fonction de la répétition de l'application des charges |

En ce qui concerne les enrobés confectionnés avec le liant selon l'invention, on peut bien évidemment retenir des formules granulaires qui ont fait leur preuves dans le cas des enrobés bitumineux. Certaines de ces formulation sont normalisées : NF P 98-132, NF P 98-131, NF P 98-134, par exemples. Cependant les caractéristiques du liant selon l'invention autorisent à revoir ces formules granulaires. C'est pourquoi dans le cas d'applications de liant selon l'invention on pourra envisager n'importe quelle combinaison de classes granulaires.

De plus, dans le cas des enrobés bitumineux, les granulats doivent être conformes à des spécifications relatives à leurs propriétés mécaniques ; les spécifications correspondantes font partie de la norme XP P 18-540. Dans le cas des enrobés avec le liant végétal selon l'invention, on peut envisager l'utilisation de granulats qui seraient réputés non conformes pour une utilisation en enrobés bitumineux.

La quantité de liant selon l'invention utilisée pour former les enrobés correspond à celle de bitume classiquement utilisée pour réaliser des enrobés bitumineux.

Ainsi, le liant selon l'invention représentera généralement de 3 à 10% du poids total de l'enrobé.

Les exemples suivants illustrent la présente invention.

### 1. Réalisation de liants de nature végétale selon l'invention

### 1.1 Principe de fabrication

L'huile végétale est portée à une température choisie supérieure d'environ 20 à 50°C, typiquement de l'ordre de 30°C à la température de ramollissement de la résine retenue pour entrer dans la composition du liant végétal. Par exemple si on souhaite utiliser une résine dont la température de ramollissement est de 135°C, on chauffera l'huile retenue à une température de l'ordre de 165°C à 170 °C.

La résine est alors incorporée petit à petit dans l'huile. Le mélange est agité. Une fois la totalité de la masse de résine introduite on maintient pendant 90 minutes le mélange sous agitation et à la température voulue.

### 1.2 Exemples de formulations de liants selon l'invention

Les différentes résines utilisées pour formuler les liants sont données dans le tableau III ci-dessous :

**TABLEAU III**

| Référence : | Nom commercial ou Nature | Température de ramollissement, °C |
|---|---|---|
| Résine A | Résine pinène terpène Dercolyte^{®} 135A | 135 |
| Résine B | Ester phénolique de colophane modifiée Sylvaprint^{®} 8785 | 160 |
| Résine C | Ester maléique de résine de colophane Sylvacote^{®} 4973 | 106 |

Les huiles végétales utilisées sont données dans le tableau IV.

**TABLEAU IV**

| **Référence :** | **Nature** | **Viscosité Pa.s à 25°C** |
|---|---|---|
| Huile A | Huile de lin | 1 |
| Huile B | Huile de bois | 3 |
| Huile C | Huile de ricin déshydratée | 2,5 |

A partir des résines et huiles ci-dessus, on a formulé des liants selon l'invention. La composition de ces liants, leur pénétrabilité et leur température (point) de ramollissement sont données dans le tableau V ci-dessous.

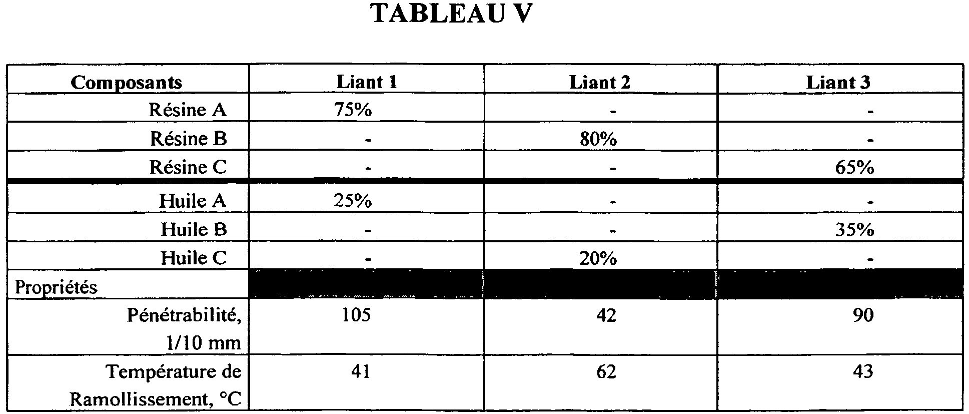

Le bitume est fréquemment mis en émulsion afin d'en faciliter l'usage dans des procédés aussi divers que :
a) Les enduits superficiels, les couches d'accrochage, les couches de cure, l'imprégnation, le traitement des sols et des graves, les graves d'émulsion, les enrobés à l'émulsion, les enrobés coulés à froid et d'une manière générale les procédés tels que décrits dans l'ouvrage « Les émulsions de bitume. Généralités. Applications » édités en 1988 par le syndicat français des émulsions routières de bitume.
b) Les couches de protection de pipe-lines, d'ouvrage métalliques, d'ouvrage en béton, Liant entrant dans la fabrication de panneaux d'isolation thermiques et phoniques à base de particules de bois ou de matériaux polymères et d'une manière générale les usages décrits dans « The Shell Bitumen Industrial Handbook » publié par Shell Bitumen en 1995, ISBN 0-9516625-1-1.

Le liant selon l'invention peut sans difficultés être mis en émulsion avec les émulsifiants classiquement utilisés pour l'émulsification des bitumes. Ces émulsifiants, ou mélanges d'émulsifiant, qui peuvent être cationiques, anioniques ou non-ioniques, sont bien connus de l'homme de l'art.

La formule de l'émulsion est choisie en fonction de l'application visée. Cette émulsion de liant selon l'invention peut alors remplacer les émulsions de bitume dans leurs applications.

A titre d'exemple on a réalisé des émulsions avec le liant 1 du tableau V. Les formules sont reportées dans le tableau VI ci-dessous. Les émulsions ont été produites avec un moulin colloïdal de type émulbitume, mais on peut utiliser tous moyens classiques de mise en émulsion.

**TABLEAU VI**

| Type d'émulsion | Constituants | Composition pour 1000 g d'émulsion | Commentaire |
|---|---|---|---|
| Cationique | Liant 1 | 650 | Le dinoram S^{®} |
| | Dinoram S^{®} | 2 | est un |
| | Acide Chlorhydrique | 2 | émulsifiant |
| | Eau | 346 | fourni par la société Ceca |
| Anionique | Liant 1 | 600 | Indulin ISE^{®} et |
| | Indulin ISE^{®} | 30 | Indulin C^{®} sont |
| | Indulin C^{®} | 7 | des produits |
| | Soude | Quantité suffisante | fournis par |
| | | pour atteindre pH | Westvaco |
| | | entre 9,5 et 40,5 | |
| | Eau | Complément à 1000 | |
| Non ionique | Liant 1 | 650 | Stabiram 3070^{®} |
| | Stabiram 3070^{®} | 20 | est un produit |
| | Eau | 330 | Ceca |

### 2. Exemples d'utilisation des liants selon l'invention

Dans ces exemples, sauf indication contraire, toutes les parties et pourcentages sont exprimés en poids.

### 2.1. Utilisation en enrobés

Un enrobé de type béton bitumineux semi grenu 0/10, BBSG, a été confectionné à partir de granulats « La Noubleau » produits par les carrières Roy. La formule granulaire était la suivante :
- Sable 0/2: 39%
- Gravillons 2/4: 18%
- Gravillons 4/6: 12%
- Gravillons 6/10: 31 %

Le liant 1 selon l'invention, décrit dans le tableau V, a été incorporé dans cette formule granulaire à raison de 5,9 parties de liant pour 100 parties du mélange granulaire.

Des éprouvettes ont été confectionnées et caractérisées. Les valeurs de ces caractéristiques ont été trouvées conformes à celles d'un BBSG de classe 3 de la norme NF P 98-130.

De façon inattendue on a également trouvé que cet enrobé, confectionné avec le liant selon l'invention, présentait une tenue aux hydrocarbures améliorée par comparaison avec un enrobé de même formule granulaire mais dont le liant était un bitume de classe 50/70. La procédure utilisée pour cette évaluation est décrite dans « Des revêtements résistants aux hydrocarbures » publiée par C. Deneuvillers, J.-F. Gal et F. Létaudin dans RGRA n°800 décembre 2001, p. 34.

### 2.2. Utilisation en asphalte

Un asphalte de trottoir a été confectionné en adoptant la formule suivante :

Liant 2 selon l'invention, Tableau V : 8%
- Filler :: 25%
- Sable 0/2: 37%
- Gravillon 2/6: 30%

Les propriétés de cet asphalte ont été trouvées tout à fait satisfaisantes pour l'emploi visé.

### 2.3. Utilisation comme liant d'enduisage

On prépare un liant 4 selon l'invention. Il a la composition suivante :
- Résine C: 60%
- Huile B: 32%
- Ester méthylique de colza: 8,8%
- Octoate de Cobalt: 0,2%

Mesurée selon la norme NF T 66-005, la viscosité de ce liant a été trouvée égale à 100 sec à 40°C. Cette viscosité est adaptée à l'emploi de ce liant en technique d'enduisage. On a également vérifié que sa consistance évoluait au cours du temps comme le requiert ce type d'application.

Pour cela on a réalisé des échantillons de liant d'une épaisseur de 1 mm. Ces films ont été stockés dans une étuve ventilée régulée à 20°C. Après 3, 7, 14 et 28 jours, la température de ramollissement de ces échantillons a été mesurée. Elles sont comparées dans le tableau VII à celle du liant référence 1 donnée dans le brevet FR 2 768 150, réputé conforme à un usage pour enduit. Cette évolution de la température de ramollissement confirme la possibilité d'utiliser ce liant en enduisage.

**TABLEAU VII : Evolution de la température de ramollissement du liant 4 - Comparaison avec un liant bitumineux de fonction équivalente**

| | **Température de ramollissement, °C** | |
|---|---|---|
| Temps de mûrissement, Jour | Liant référence 1 de FR 2 768 150 | Liant 4 |
| 3 | 27,45 | 25,0 |
| 7 | 31,25 | 28,5 |
| 14 | 34,3 | 32,0 |
| 28 | Non précisée | 35,5 |
| 31 | 37,5 | 40 |

### 2.4. Utilisation pour la fabrication de géomembranes ou feuilles d'étanchéité.

Le bitume entre dans la composition de géomembranes armées telles que, par exemple, le Colétanche^{®} produit par Cold Chon. Ces géomembranes bitumineuses permettent d'assurer l'étanchéité de la structure dans laquelle elles sont employées. Elles sont utilisées pour traiter les problèmes d'environnement :
- Confinement de décharges,
- Stockage de liquides pollués et de lixiviats,
- Stockage de déchets divers et notamment radioactifs,
- Protection des nappes phréatiques.

Elles sont également employées dans la construction d'ouvrages hydrauliques comme des barrages, bassins et canaux.

Le bitume entre également dans la composition de feuilles d'étanchéité. On peut prendre comme exemple les produits Alpal^{®} ou Hyrène^{®} de la société Axter. Ces feuilles d'étanchéité sont utilisées en :
- Etanchéité pour les toitures terrasses (inaccessibles autoprotégées ou sous gravillons, toitures-terrasse jardins, piétonnes, privatives ...);
- Etanchéité des parois enterrées ;
- Etanchéité pour le Géni Civil ;
- Couverture pour les bâtiments (habitation ou industriels).

Le liant selon l'invention peut remplacer le bitume sans aucune difficulté technique. La composition du liant selon l'invention est ajustée en fonction des caractéristiques du bitume auquel il se substitue.

## Revendications

1. Liant pour la réalisation de couche et/ou revêtement de construction routière et/ou de génie civil, **caractérisé en ce qu'**il comprend, par rapport au poids total de (a) et (b) :
(a) au moins une résine naturelle ou naturelle modifiée, d'origine végétale, ayant un point de ramollissement mesuré selon la norme EN 1427 de 100 à 200°C,
(b) 20 à 40 % en poids d'au moins une huile d'origine végétale ayant une viscosité à 25°C de 50m Pa.s à 1000 Pa.s;
(d) ledit liant étant exempt de tout élastomère naturel ou synthétique et de tout polymère thermoplastique,
de sorte que ledit liant présente une pénétrabilité à 25°C, mesurée selon la norme NF EN 1426, de 20 à 300 1/10 mm et un point de ramollissement de 30 à 75°C, mesuré selon la norme NF EN 1427.

2. Liant selon la revendication 1, **caractérisé en ce que** la résine naturelle ou naturelle modifiée d'origine végétale est une résine de récolte choisie parmi les résines accroïdes, le dammar, les colophanes naturelles ou naturelles modifiées, les esters de colophanes, les savons de colophanes et les résinats métalliques.

3. Liant selon la revendication 2, **caractérisé en ce que** les esters de colophanes sont des esters de colophanes polymérisés et du glycérol et/ou des esters de colophanes maléisés et du glycérol et les résinates sont des résinates de calcium.

4. Liant selon la revendication 1, **caractérisé en ce que** la résine naturelle ou naturelle modifiée d'origine végétale est une résine fossile.

5. Liant selon l'une quelconque des revendications précédentes, **caractérisé en ce que** l'huile végétale est choisie parmi les huiles de colza, de tournesol, de soja, de fin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide et de coprah, et leurs mélanges.

6. Liant selon l'une quelconque des revendications précédentes, **caractérisé en ce qu'**il comprend, en outre, au moins un catalyseur de polymérisation de l'huile (ou des huiles) végétales.

7. Liant selon la revendication 6, **caractérisé en ce que** catalyseur est choisi parmi les sels de cobalt, zirconium et manganèse.

8. Liant selon la revendication 7, **caractérisé en ce que** le sel est un octanoate ou un naphténate.

9. Matériau pour la réalisation de couches et/ou revêtements de construction, **caractérisé en ce qu'**il comprend un mélange :
(a) d'un granulat ; et
(b) d'un liant selon l'une quelconque des revendications précédentes.

10. Matériau selon la revendication 9, **caractérisé en ce que** le matériau est un enrobé.

11. Matériau selon la revendication 10, **caractérisé en ce que** le liant représente 3% à 10% du poids total du matériau.

12. Matériau selon la revendication 9, **caractérisé en ce que** le matériau est un enduit superficiel.

13. Couche ou revêtement de construction, caractérisé(e) en ce qu'elle (il) est constitué(e) du matériau selon l'une quelconque des revendications 9 à 12.

14. Couche ou revêtement de construction selon la revendication 13, caractérisé(e) en ce qu'elle (il) constitue une couche ou revêtement de construction routière ou de génie civil.

## Patentansprüche

1. Bindemittel für die Herstellung einer Schicht und/oder eines Belags im Straßenbau und/oder Bauwesen, **dadurch gekennzeichnet, dass** es Folgendes umfasst, bezogen auf das Gesamtgewicht von (a) und (b):
(a) wenigstens ein natürliches oder modifiziertes natürliches Harz pflanzlichen Ursprungs, das einen gemäß der Norm EN 1427 gemessenen Erweichungspunkt von 100 bis 200 °C aufweist;
(b) 20 bis 40 Gew.-% wenigstens eines Öls pflanzlichen Ursprungs, das eine Viskosität bei 25 °C von 50 mPa·s bis 1000 Pa.s aufweist;
(d) wobei das Bindemittel keinerlei natürliches oder synthetisches Elastomer und keinerlei thermoplastisches Polymer aufweist;
so dass das Bindemittel eine gemäß der Norm NF EN 1426 gemessene Nadelpenetration bei 25 °C von 20 bis 300 Zehntelmillimeter und einen gemäß der Norm EN 1427 gemessenen Erweichungspunkt von 30 bis 75 °C aufweist.

2. Bindemittel gemäß Anspruch 1, **dadurch gekennzeichnet, dass** das natürliche oder modifizierte natürliche Harz pflanzlichen Ursprungs ein geerntetes Harz ist, das aus Akaroidharzen, Dammar, natürlichem oder modifiziertem natürlichem Kolophonium, Kolophoniumestern, Kolophoniumseifen und Metallresinaten ausgewählt ist.

3. Bindemittel gemäß Anspruch 2, **dadurch gekennzeichnet, dass** es sich bei den Kolophoniumestern um Ester von polymerisiertem Kolophonium und Glycerin und/oder Ester von mit Maleinsäure modifiziertem Kolophonium und Glycerin und bei den Resinaten um Calciumresinate handelt.

4. Bindemittel gemäß Anspruch 1, **dadurch gekennzeichnet, dass** das natürliche oder modifizierte natürliche Harz pflanzlichen Ursprungs ein fossiles Harz ist.

5. Bindemittel gemäß einem der vorstehenden Ansprüche, **dadurch gekennzeichnet, dass** das Pflanzenöl aus Raps-, Sonnenblumen-, Soja-, Lein-, Oliven-, Palm-, Rizinus-, Holz-, Mais-, Kürbis-, Traubenkern-, Jojoba-, Sesam-, Walnuss-, Haselnuss-, Mandel-, Shea-, Macadamia-, Baumwoll-, Luzerne-, Roggen-, Färberdistel-, Erdnuss- und Kokosnussöl und ihren Gemischen ausgewählt ist.

6. Bindemittel gemäß einem der vorstehenden Ansprüche, **dadurch gekennzeichnet, dass** es weiterhin wenigstens einen Katalysator der Polymerisation des oder der Pflanzenöle umfasst.

7. Bindemittel gemäß Anspruch 6, **dadurch gekennzeichnet, dass** der Katalysator aus Cobalt-, Zirconium- und Mangansalzen ausgewählt ist.

8. Bindemittel gemäß Anspruch 7, **dadurch gekennzeichnet, dass** das Salz ein Octanoat oder ein Naphthenat ist.

9. Material für die Herstellung von Bauschichten und/oder -belägen, **dadurch gekennzeichnet, dass** es ein Gemisch umfasst aus:
(a) einem Granulat; und
(b) einem Bindemittel gemäß einem der vorstehenden Ansprüche.

10. Material gemäß Anspruch 9, **dadurch gekennzeichnet, dass** das Material ein Asphalt ist.

11. Material gemäß Anspruch 10, **dadurch gekennzeichnet, dass** das Bindemittel 3 bis 10% des Gesamtgewichts des Materials ausmacht.

12. Material gemäß Anspruch 9, **dadurch gekennzeichnet, dass** das Material ein Oberflächenbelag ist.

13. Bauschicht oder -belag, **dadurch gekennzeichnet, dass** sie oder er aus dem Material gemäß einem der Ansprüche 9 bis 12 besteht.

14. Bauschicht oder -belag gemäß Anspruch 13, **dadurch gekennzeichnet, dass** sie oder er eine Schicht oder einen Belag im Straßenbau oder Bauwesen bildet.

## Claims

1. Binder for the production of a layer and/or a coating for road works and/or civil engineering, **characterized in that** it comprises, with respect to the total weight of (a) and (b):
(a) at least one purely natural or modified natural resin, of vegetable origin, having a softening point measured according to the standard EN 1427 of 100 to 200°C
(b) 20 to 40% in weight of at least one oil of vegetable origin having a viscosity at 25°C of 50 mPa.s to 1000 Pa.s,
(d) said binder being exempt of any natural or synthetic elastomer and of any thermoplastic polymer.
so that the binder has a penetrability at 25°C., measured according to the standard NF EN 1426, of 20 to 300 1/10mm and a softening point of 30 to 75°C, measured according to the standard NF EN 1427.

2. Binder according to claim 1, **characterized in that** the purely natural or modified natural resin of vegetable origin is a harvest resin selected among the accroid resins, the dammar, the purely natural or modified natural rosins, the rosin esters, the rosin soaps and the metal resonates.

3. Binder according to claim 2, **characterized in that** the rosin esters are polymerized rosin esters and glycerol and/or maleated rosin esters and glycerol and the resonates are calcium resonates.

4. Binder according to claim 1, **characterized in that** the purely natural or modified natural resin of vegetable origin is a fossil resin.

5. Binder according to any one of the preceding claims, **characterized in that** the vegetable oil is selected among the oils made of colza, of sunflower, of soja bean, of flax, of olive, of palm, of ricin, of wood, of maize, of gourd, of grape pips, of jojoba, of sesame, of nut, of hazel, of almond, of shea, of macadamia, of cotton, of Lucerne, of rye, of cartham, of groundnut and of copra, and their mixtures.

6. Binder according to any one of the preceding claims, **characterized in that** it comprises, besides, at least one catalyst for polymerizing vegetable oil(s).

7. Binder according to claim 6, **characterized in that** the catalyst is selected among the cobalt, zirconium and manganese salts.

8. Binder according to claim 7, **characterized in that** the salt if an octanoate or a naphtenate.

9. Material for the production of building layers and/or coatings **characterized in that** it comprises a mixture of:
(a) a granulate; and
(b) a binder according to any one of the preceding claims.

10. Material according to claim 9, **characterized in that** the material is an asphalt.

11. Material according to claim 10, **characterized in that** the binder accounts for 3% to 10% of the total weight of the material.

12. Material according to claim 9, **characterized in that** the material is a surface dressing.

13. Building layer or coating, **characterized in that** it is composed of the material according to any one of claims 9 to 12.

14. Building layer or coating to claim 13, **characterized in that** it makes up a layer or coating for road works or civil engineering.
